# EUROPÄISCHE PATENTANMELDUNG

(11) **EP 1 225 443 A2**
(43) Veröffentlichungstag der Anmeldung: **24.07.2002**
(21) Anmeldenummer: 02000416.4
(22) Anmeldetag: 08.01.2002
(51) Int. Cl.: G01N 21/95

(54) **Gratprüfungs-Sensorvorrichtung**

(30) Priorität: 22.01.2001 DE 10103177
(71) Anmelder: Balluff GmbH, 73765 Neuhausen (DE)
(72) Erfinder: Jagiella, Manfred, 72374 Notzingen (DE); Fericean, Sorin, Dr., 71229 Leonberg (DE)
(74) Vertreter: Hoeger, Stellrecht & Partner

(57) **Zusammenfassung**

Um eine Gratprüfungs-Sensorvorrichtung zur Prüfung von Graten an einem Werkstück zu schaffen, welche universell einsetzbar ist, wird vorgeschlagen, daß diese mindestens einen Abstandssensor mit einem Detektorkopf umfaßt, wobei der Detektorkopf in einem Abstand zu dem Werkstück positionierbar ist und Detektorkopf und Werkstück relativ zueinander beweglich sind, und wobei der Detektorkopf elektromagnetisch an das Werkstück koppelbar ist oder durch ihn das Werkstück mit einem elektromagnetischen Signal beaufschlagbar ist und die Ankopplung an das Werkstück oder ein elektromagnetisches Reaktionssignal des Werkstücks auf das Beaufschlagungssignal abhängig von einem Abstand zwischen Detektorkopf und Werkstück sind, so daß dieser Abstand berührungsfrei ermittelbar ist und durch den Detektorkopf eine Werkstückoberfläche berührungsfrei abtastbar ist.

## Beschreibung

Die Erfindung betrifft eine Gratprüfungs-Sensorvorrichtung.

Grate können überall dort entstehen, wo Werkstücke mittels spanabhebender Materialbearbeitung bearbeitet werden. Beispielsweise können Grate an Bohrungen entstehen. Grate können aus verschiedenen Gründen störend sein. Beispielsweise sollten an abzudichtenden Trennflächen keine Grate vorhanden sein, da sonst das Dichtungsergebnis beeinflußt wird. Es kann gewünscht sein, daß bei bestimmten Werkstücken kein Materialüberstand vorliegt. Vorhandene Grate, welche bei einer Bauteilmontage abfallen, können störend sein. Fallen sie im Betrieb eines Aggregats ab, kann dieses zerstört werden. Grate an Materialkanten eines zu beschichtenden Werkstücks können unregelmäßige Lackdichten verursachen. Scharfkantige Grate an äußeren Werkstückoberflächen können zu Schnittverletzungen führen.

Es ist deshalb oft notwendig, nach der Werkstückbearbeitung eine Gratprüfung durchzuführen, wobei diese zwei Aspekte haben kann, nämlich eine qualitative Gratprüfung, ob Grate vorhanden sind und eine quantitative Prüfung, ob beispielsweise eine bestimmte Höhentoleranz eines Grats überschritten ist.

Gratprüfungen werden bisher üblicherweise manuell durchgeführt, indem beispielsweise mit dem Finger, dem Fingernagel, einem Zahnstocher, einem Rohrreiniger mit Wattebesatz, einer Bleistiftspitze oder einem Absteckdorn eine entsprechende Werkstückoberfläche abgetastet wird. Es werden auch visuelle Methoden verwendet, indem beispielsweise ein Grat mit dem bloßen Auge geprüft wird, unter einem Mikroskop oder mittels einer Lupe, einem Otoskop oder mittels eines Endoskops.

Solche Methoden sind sehr zeitaufwendig und mindestens der quantitative Informationsgehalt ist relativ gering.

Aus der JP 06066536 A ist ein Verfahren zur Vermessung von Gratformen und Ausmessungen bekannt, wobei der Grat durch Scherung entstanden ist. Über Scanningmittel wird mit einem Laserstrahl eine entsprechende Plattenkante abgetastet und es sind Lichtempfänger vom Positionsdetektionstyp vorgesehen. Bei einer entsprechenden Vorrichtung ist eine aufwendige Optik nötig. Da ein großes freies Sichtfeld vorhanden sein muß, lassen sich innere Werkzeugoberflächen damit nicht abtasten. Auch ist das Meßergebnis sehr anfällig gegenüber Verschmutzungen im Sichtfeld, die den Strahlengang beeinflussen können.

Der Erfindung liegt daher die Aufgabe zugrunde, eine Gratprüfungs-Sensorvorrichtung zu schaffen, welche universell und auf einfache Weise einsetzbar ist.

Diese Aufgabe wird erfindungsgemäß dadurch gelöst, daß die Gratprüfungs-Sensorvorrichtung zur Prüfung von Graten an einem Werkstück mindestens einen Abstandssensor mit einem Detektorkopf umfaßt, wobei der Detektorkopf in einem Abstand zu dem Werkstück positionierbar ist und Detektorkopf und Werkstück relativ zueinander beweglich sind, und wobei der Detektorkopf elektromagnetisch an das Werkstück koppelbar ist oder durch das Werkstück mit einem elektromagnetischen Signal beaufschlagbar ist und die Ankopplung an das Werkstück oder ein elektromagnetisches Reaktionssignal des Werkstücks auf das Beaufschlagungssignal abhängig von einem Abstand zwischen Detektorkopf und Werkstück sind, so daß dieser Abstand berührungsfrei ermittelbar ist und durch den Detektorkopf eine Werkstückoberfläche berührungsfrei abtastbar ist.

Durch die erfindungsgemäße Verwendung eines Abstandssensors als eigenes Bauteil, wobei dieser Abstandssensor in Wechselwirkung mit dem Werkstück tritt und die Wechselwirkung von dem Abstand zwischen Abstandssensor und Werkstück abhängt, läßt sich auf einfache Weise eine Gratprüfung durchführen. Der Abstandssensor bildet dabei ein Sensorfeld aus, welches lokal an das Werkstück koppelt. Dadurch lassen sich auch innere Werkstückoberflächen prüfen, wenn der Abstandssensor entsprechend eingeführt wird. Die Überprüfung erfolgt aber berührungsfrei, so daß ein einfacher und insbesondere auch maschineller Einsatz ermöglicht ist.

Auch ist erfindungsgemäß der Einfluß von Verschmutzungen verringert, da diese sich höchstens auf das lokale Sensorfeld auswirken.

Da die Ankopplung des Abstandssensors an das Werkstück von dem Abstand beeinflußt ist und das Vorhandensein eines Grats wiederum den Abstand selber ändert, lassen sich auch quantitative Informationen bezüglich des Grats ermitteln, beispielsweise dessen Ausdehnungen und damit verbunden der Typ des Grats.

Vorteilhafterweise weist der Detektorkopf eine aktive Fläche auf, über welche eine lokale Ankopplung an das Werkstück erfolgt oder über welche Beaufschlagungssignale lokal an einem Werkstückoberflächenbereich abgegeben und Reaktionssignale von diesem Bereich empfangen werden. Dadurch läßt sich eine entsprechende Werkstückoberfläche - innere oder äußere - abtasten und die Lage der aktiven Fläche relativ zur Werkstückoberfläche bestimmt den Abtastbereich, in welchem auf Grate geprüft wird. Es läßt sich also eine lokale Abtastung durchführen, indem Detektorkopf und Werkstück relativ zueinander bewegt werden, wobei die Graterkennung selber berührungsfrei erfolgt und sich auch quantitative Aussagen machen lassen.

Günstig ist es, wenn Detektorkopf und Werkstück parallel zu einer Abstandsrichtung relativ zueinander beweglich sind. Dadurch läßt sich beispielsweise der Detektorkopf in eine Bohrung am Werkstück eintauchen, um diese auf Grate zu überprüfen. Es läßt sich dadurch auch, wenn ein Detektorkopf über eine Werkstückoberfläche geführt werden soll, ein definierter Abstand zu dieser Oberfläche einstellen. Weiterhin ist es vorteilhaft, wenn Detektorkopf und Werkstück quer zu einer Höhenabstandsrichtung relativ zueinander beweglich sind, um so beispielsweise eine äußere Werkstückoberfläche abtasten zu können.

Ganz besonders vorteilhaft ist es, wenn eine Positioniervorrichtung zur Positionierung und Bewegung des Detektorkopfs relativ zum Werkstück vorgesehen ist. Es läßt sich dann eine definierte Bewegung des Detektorkopfs relativ zum Werkstück erreichen und insbesondere läßt sich dieses auf definierte Weise abtasten.

Günstig ist es dazu, wenn der Detektorkopf durch die Positioniervorrichtung längs linear unabhängiger Koordinatenrichtungen bewegbar ist, um so einen maximalen Bewegungsspielraum zu erhalten.

Weiterhin günstig ist es, wenn der Detektorkopf relativ zum Werkstück drehbar ist. Beispielsweise kann dann der Detektorkopf als Sonde in eine Bohrung eingeführt werden und dort gedreht werden, um einen ganzen Umfangsbereich einer inneren Werkstückoberfläche zu prüfen.

Bei einer kostengünstigen Variante wird eine Positioniervorrichtung für ein Werkzeug zur Bearbeitung des Werkstücks als Positioniervorrichtung für einen Abstandssensor verwendet. Die Positioniervorrichtung für ein Werkzeug muß diesem genau die Bewegungsmöglichkeiten gestatten, die zur definierten Bearbeitung des Werkstücks erforderlich sind. Diese Bewegungsmöglichkeiten lassen sich dann zur Überprüfung des Werkstücks mittels eines Abstandssensors einsetzen, um das Werkstück insbesondere auch automatisch bezüglich Graten prüfen zu können. Ein Meßkopf der erfindungsgemäßen Gratprüfungs-Sensorvorrichtung läßt sich dann als Austauscheinheit statt des Werkzeugs insbesondere direkt nach der Werkzeugbearbeitung an dem Werkstück zur Gratprüfung verfahren, ohne daß das Werkstück umgespannt werden muß. Das Koordinatensystem für die relative Bewegung zum Werkstück bleibt daher erhalten, so daß neben der Zeitersparnis auch kein Genauigkeitsverlust eintritt. Die sowieso vorhandene Werkzeug-Positioniervorrichtung wird also als genaue Positioniervorrichtung für einen Abstandssensor verwendet, so daß dieser relativ zum Werkstück beliebig positionierbar ist und die Informationen über die relative Position zum Werkstück kontinuierlich zur Verfügung stehen.

Günstigerweise ist der Detektorkopf als Sonde ausgebildet oder in einer Sonde angeordnet, so daß auch innere Oberflächen des Werkstücks abgetastet werden können. Insbesondere ist die Sonde dazu in eine Bohrung am Werkstück einführbar, um beispielsweise Grate an Querverschneidungen detektieren zu können.

Günstig ist es dabei, wenn elektronische Komponenten der Vorrichtung und insbesondere des Abstandssensors ganz oder teilweise in der Sonde integriert sind, so daß die Störsicherheit erhöht ist.

Zur definierten Prüfung eines Werkstücks bezüglich Graten ist vorzugsweise ein Sichtbereich des Abstandssensors eingestellt. Durch die Einstellung des Sichtbereichs wird die Ausbildung und räumliche Lage eines Sensorfelds des Abstandssensors mit seiner aktiven Fläche bezüglich des Werkstücks gezielt eingesetzt und der lokale Bereich der Werkstückoberfläche, welcher überprüft wird, wird gezielt eingestellt.

Es kann dann günstig sein, wenn ein Sichtbereich und somit auch eine Blickrichtung des Abstandssensors elektromagnetisch einstellbar ist. Damit kann die Blickrichtung gezielt eingestellt und auch verändert werden. Beispielsweise kann ein Sensorfeld gedreht werden. Die Einstellung kann dabei durch Einstellung der Positionierung des Detektorkopfs relativ zum Werkstück erfolgen, wobei dies durch ein elektromagnetisches Signal veranlaßt wird, oder alternativ oder zusätzlich auch durch Einstellung der Ausbildung des Sensorfelds am Detektorkopf.

Es kann dabei bei einer Variante einer Ausführungsform vorgesehen sein, daß der Abstandssensor derart ausgebildet und/oder abgeschirmt ist, daß die elektromagnetische Ankopplung zwischen Detektorkopf und Werkstück auf einen bestimmten Sichtbereich beschränkt ist, der insbesondere zur Überprüfung des Werkstücks gewünscht wird.

Der bestimmte Sichtbereich kann eine Sichtrichtung umfassen, welche im wesentlichen quer zu einer Längsrichtung eines Abstandssensors ist. Es läßt sich dann beispielsweise ein Abstandssensor längs einer Achse einer Bohrung verschieben, wobei während der Verschiebung die Bohrungswände prüfbar sind.

Es kann auch vorgesehen sein, daß der bestimmte Sichtbereich eine Sichtrichtung umfaßt, welche im wesentlichen parallel zu einer Längsrichtung eines Abstandssensors ist. Dadurch läßt sich beispielsweise eine äußere Oberfläche eines Werkstücks prüfen, wenn der Abstandssensor über das Werkstück geführt wird.

Es sind auch Mischformen möglich, bei denen eine Sichtrichtung eingestellt wird, welche in einem bestimmten Winkel beispielsweise zu einer Längsrichtung eines Abstandssensors liegt; der Sichtbereich wird vorteilhafterweise an die spezielle Anwendung angepaßt.

Es kann vorgesehen sein, daß in einem Meßkopf eine Signalvorverarbeitung erfolgt und eine Auswerteeinheit zur Gratprüfung vorgesehen ist. Das vom Meßkopf gelieferte Signal enthält dann die Abstandsinformationen und die Auswerteeinheit wertet diese Informationen hinsichtlich der Gratprüfung aus. Die Auswerteeinheit kann dabei in dem Meßkopf integriert sein oder von ihm getrennt. Beispielsweise kann es sich um einen PC handeln, um einen Teil einer Steuereinrichtung einer Bearbeitungsstraße oder um eine Micokontrollerschaltung, wobei die Auswertung mittels Software und/oder einer diskreten Schaltung durchführbar ist. Ein entsprechender Auswertungsalgorithmus umfaßt beispielsweise den Vergleich mit Referenzverläufen, um beispielsweise anzuzeigen, ob die Werkstückqualität innerhalb oder außerhalb eines Toleranzbereichs liegt. Der Auswertungsalgorithmus könnte bei einer Werkstückserie auch einen zeitlichen Vergleich umfassen, gemäß dem die Gratbildung in ihrer zeitlichen Entwicklung überwacht wird, um beispielsweise eine indirekte Werkzeug-Qualitätsüberwachung durchzuführen.

Bei einer Variante einer Ausführungsform ist der Detektionskopf mit Kontakten versehen, so daß er mit einer in einem Abstand angeordneten Einrichtung verbindbar ist. Es läßt sich dann der Detektionskopf beispielsweise mit einer Spannung versorgen, wobei ein Netzgerät oder dergleichen in einem Abstand von dem Detektionskopf angeordnet ist. Es läßt sich auch eine Auswerteeinheit in einem Abstand vom Detektionskopf anordnen und insbesondere in einem solchen Abstand, daß diese nicht im Bereich der Werkstückbearbeitung liegt.

Es kann alternativ auch vorgesehen sein, daß der Detektionskopf als Remote-Einheit ausgebildet ist, welche drahtlos an eine in einem Abstand angeordnete Einrichtung koppelbar ist. Die entsprechenden Detektionssignale des Detektionskopfs werden dann beispielsweise über Infrarotstrahlung an die ferne Einrichtung übertragen.

Bei einer vorteilhaften Ausführungsform ist der Abstandssensor ein induktiver Sensor, bei welchem der Detektionskopf induktiv an ein metallisches Werkstück koppelt. Mit solchen induktiven Sensoren lassen sich Abstände zu Werkstücken gut vermessen. Diese sind insbesondere unempfindlich gegenüber Verschmutzungen wie Öl, da die induktive Ankopplung dadurch im wesentlichen unbeeinflußt bleibt, wenn die Verschmutzung nicht metallisch ist.

Es kann vorgesehen sein, daß der Abstandssensor einen metallischen Außenflächenbereich aufweist, welcher spannungsbeaufschlagbar ist. Es läßt sich dann überwachen, ob ein Abstandssensor eventuell an ein Werkstück stößt, indem nämlich der metallische Außenflächenbereich mit einem Spannungspotential beaufschlagt wird. Tritt dieser dann mit dem Werkstück in Kontakt, läßt sich ein Warnsignal generieren, welches beispielsweise an eine Positioniervorrichtung weitergegeben wird, um so eine Gegenreaktion zu erzeugen und den Abstandssensor wieder weg von dem Werkstück zu bewegen. Ein Warnsignal kann auch erzeugt werden, wenn das Meßsignal eine festgelegte Schwelle unter- oder überschreitet.

Es kann auch vorgesehen sein, daß der Abstandssensor ein optischer Abstandssensor ist, bei welchem der Detektorkopf das Werkstück mit einem optischen Signal beaufschlägt und ein Reflexionssignal registriert. Auch auf diese Weise lassen sich lokal Abstände zwischen dem Detektorkopf und dem Werkstück ermitteln.

Zur Ausbildung eines lokalen Sensorfelds zwischen Werkstück und Detektorkopf wird dabei vorzugsweise das Lichtsignal faseroptisch eingekoppelt und/oder ausgekoppelt, um eben so ein definiertes lokales Sichtfeld erreichen zu können. Der Detektorkopf als Meßkopf läßt sich mittels der Verwendung von Glasfasern sehr kompakt ausgestalten und insbesondere läßt sich ein Lichttaster dann auch in der Art einer Sonde beispielsweise in Bohrungen eintauchen.

Bei einem Abstandssensor kann es sich auch um einen orto-induktiven Abstandssensor handeln, der insbesondere wahlweise alternativ oder kombiniert ein Werkstück lokal optisch und induktiv auf Grate abtasten kann.

Eine weitere Möglichkeit besteht darin, daß der Abstandssensor ein kapazitiver Abstandssensor ist, bei welchem der Detektorkopf kapazitiv an das Werkstück koppelt. Auch über die kapazitive elektromagnetische Kopplung lassen sich Informationen über den Abstand zwischen Abstandssensor und Werkstück erhalten.

Bei einer Variante davon ist der Abstandssensor ein gekoppelter induktivkapazitiver Abstandssensor, bei welchem ein Element vorgesehen ist, welches sowohl induktiv als auch kapazitiv an das Werkstück koppelbar ist. Es läßt sich dadurch gewissermaßen eine doppelte Abstandsmessung durchführen, nämlich einmal kapazitiv und einmal induktiv. Je nach Anwendung läßt sich die optimalere Methode auswerten bzw. es kann auch ein Vergleich durchgeführt werden. Ein Signal wird dann beispielsweise über ein Koaxialkabel aus dem induktiv-kapazitiven Abstandssensor ausgekoppelt.

Bei einer Variante einer Ausführungsform einer erfindungsgemäßen Gratprüfungs-Sensorvorrichtung ist eine Mehrzahl von Abstandssensoren vorgesehen. Eine Mehrzahl von Abstandssensoren weist entsprechend eine Mehrzahl von Sensorfeldern auf und dementsprechend läßt sich mit dieser Mehrzahl ein Werkstück prüfen. Es kann dabei vorgesehen sein, daß Sensorsignale unterschiedlicher Abstandssensoren miteinander verknüpft werden. Beispielsweise wird ein Differenzsignal von Abstandssensoren ausgewertet und/oder ein Summensignal von Abstandssensoren ausgewertet. Dadurch läßt sich eine definierte Prüfung bezüglich Graten und von Graten durchführen und es lassen sich gute quantitative Resultate zur Bestimmung des Grattyps und von Gratausdehnungen erhalten. Durch die Kombination mehrerer Sensorsignale durch eine geeignete Verknüpfung (z. B. Summe oder Differenz) können insbesondere die Auswirkungen von Störfaktoren wie Temperaturdrift, Materialinhomogenitäten und dergleichen reduziert werden, oder es kann durch eine Kombination eines Meß- und eines Referenzsignals der Meßeffekt verstärkt werden.

Es kann vorgesehen sein, daß Abstandssensoren der Gratprüfungs-Sensorvorrichtung die gleiche Blickrichtung aufweisen, um so beispielsweise die gleiche Werkstückoberfläche mit verschiedener Auflösung zu überprüfen. Es kann auch vorgesehen sein, daß Abstandssensoren der Gratprüfungs-Sensorvorrichtung unterschiedliche Blickrichtungen aufweisen, um so gleichzeitig unterschiedliche Werkstückoberflächen prüfen zu können. Insbesondere können Abstandssensoren entgegengesetzte Blickrichtung aufweisen.

Bei einer vorteilhaften Variante einer Ausführungsform sind die Abstandssensoren der Mehrzahl von Abstandssensoren relativ zueinander fest positioniert. Bei einer Verschiebung werden dann alle Abstandssensoren gleichzeitig miteinander verschoben, so daß dadurch eine definierte Bewegung der Gratprüfungs-Sensorvorrichtung relativ zu einem Werkstück möglich ist.

Es ist dann besonders vorteilhaft, wenn die relative Position von Abstandssensoren der Gratprüfungs-Sensorvorrichtung einstellbar ist. Je nach Anwendung kann dann der optimale Abstand zwischen Abstandssensoren eingestellt werden, beispielsweise quer zu einer Längsrichtung der Abstandssensoren und parallel zu dieser. Es lassen sich dann die Abstandssensoren relativ zueinander versetzt anordnen, was bei bestimmten Anwendungen vorteilhaft sein kann. Beispielsweise kann bei dem Eintauchen von Abstandssensoren in eine Bohrung über die Positionseinstellung eine Anpassung an den Bohrungsdurchmesser durchgeführt werden.

Es kann für bestimmte Anwendungen auch günstig sein, wenn Abstandssensoren die gleiche Sichtebene aufweisen, so daß bei der Verschiebung der Gratprüfungs-Sensorvorrichtung relativ zum Werkstück gleichzeitig ein großer Oberflächenbereich abgetastet wird, beispielsweise eine Umfangsfläche innerhalb einer Bohrung.

Es kann auch vorgesehen sein, daß Abstandssensoren versetzte Sichtebenen aufweisen, so daß beispielsweise bei einem Verfahren innerhalb einer Bohrung die gleiche Werkstückoberfläche mehrmals prüfbar ist, und zwar insbesondere mit unterschiedlicher Auflösung.

Bei einer Variante einer Ausführungsform sind für eine Gratprüfungs-Sensorvorrichtung zwei Abstandssensoren vorgesehen und bei einer weiteren Variante drei Abstandssensoren, welche eine Prüfung einer Werkstückoberfläche durchführen können.

Günstigerweise ist die Gratprüfungs-Sensorvorrichtung bezüglich Ausgestaltung von Abschirmung und/oder Blickrichtung und/oder Arbeitsfrequenz und/oder einer Freizone an das zu überprüfende Werkstück angepaßt, um so eine optimale Prüfung in Abhängigkeit von dem zu prüfenden Werkstück zu erhalten.

Insbesondere zur Prüfung einer großen Serie von Werkstücken ist es vorteilhaft, wenn ein Abstandssensor gesteuert und/oder geregelt über ein Werkstück verfahren wird, um dieses abzutasten. Günstig ist es dazu, wenn ein vom Abstandssensor ermittelter Abstand zum Werkstück eine Regelgröße ist. Dieser wird kontinuierlich erfaßt und über eine Positioniervorrichtung während des Abtastens so eingestellt, daß er im wesentlichen konstant bleibt. Durch die Positioniervorrichtung ist die absolute Position des Detektorkopfs des Abstandssensors zum Werkstück bekannt und aus dem Vergleich eines tatsächlichen Ausgangssignals des Abstandssensors mit einem Referenzverlauf lassen sich Informationen über die Gratbildung am Werkstück erhalten, wobei die Abweichungen vom Referenzverlauf auch quantitative Informationen enthalten.

Die eingangs genannte Aufgabe wird erfindungsgemäß ferner gelöst durch die Verwendung eines Abstandssensors, welcher berührungsfrei arbeitet und an einem Werkstück lokal positionierbar ist und lokal mit diesem in Wechselwirkung treten kann, wobei aus der Wechselwirkung ein Abstand zwischen Werkstück und Abstandssensor ermittelbar ist, als Gratprüfungssensor.

Diese Verwendung weist die bereits im Zusammenhang mit der erfindungsgemäßen Vorrichtung verwendeten Vorteile auf.

Weitere vorteilhafte Ausgestaltungen wurden bereits im Zusammenhang mit der erfindungsgemäßen Vorrichtung erläutert.

Insbesondere ist es vorteilhaft, wenn zwischen dem Abstandssensor und dem Werkstück ein lokales Sensorfeld ausbildbar ist, über welches ein Abstand zwischen Abstandssensor und Werkstück ermittelbar ist. Dadurch, daß das Sensorfeld lokal ausgebildet ist, läßt sich der Abstandssensor lokal über das Werkstück bewegen und dieses entsprechend prüfen.

Die nachfolgende Beschreibung bevorzugter Ausführungsformen dient im Zusammenhang mit der Zeichnung der näheren Erläuterung der Erfindung. Es zeigen:
- Figuren 1(a), (b), (c): verschieden Formen von Graten an einer Bohrung in einem Werkstück;
- Figur 2: eine schematische Darstellung eines Abstandssensors, welcher in einer erfindungsgemäßen Gratprüfungs-Sensorvorrichtung eingesetzt ist;
- Figur 3: eine schematische Darstellung eines weiteren Abstandssensors, welcher in einer Gratprüfungs-Sensorvorrichtung eingesetzt ist;
- Figur 4: eine schematische Darstellung eines Ausführungsbeispiels, bei welchem eine Gratprüfungs-Sensorvorrichtung zwei Abstandssensoren umfaßt;
- Figur 5: eine Variante einer erfindungsgemäßen Gratprüfungs-Sensorvorrichtung mit ebenfalls zwei Abstandssensoren;
- Figur 6: eine weitere Variante mit zwei axial beabstandet angeordneten Abstandssensoren;
- Figur 7: schematisch die Bewegungsmöglichkeiten eines Abstandssensors, welcher an einer Positioniervorrichtung gehalten ist, relativ zu einem Werkstück;
- Figur 8: ein Werkstück mit einer Reihe von Bohrungen 1 bis 9 mit unterschiedlichem Durchmesser und unterschiedlicher Gratausbildung in einer seitlichen Längsschnittansicht (Figur 8(a)) und in Draufsicht (Figur 8(b));
- Figur 9: einen von einem Abstandssensor gelieferten Spannungsverlauf, wenn dieser über das Werkstück in dessen Längsrichtung symmetrisch zu den Bohrungsdurchmessern in einem bestimmten Abstand (1,85 mm) geführt wird;
- Figur 10: den Spannungsverlauf eines weiteren Abstandssensors, welcher gegenüber dem bei dem Meßdiagramm gemäß Figur 9 verwendeten Sensor eine größere aktive Fläche aufweist und in einem anderen Abstand (5 mm) über das Werkstück geführt wird;
- Figur 11: einen Spannungsverlauf des Abstandssensors, welcher bei der Ermittlung des Meßdiagramms gemäß Figur 10 verwendet wurde, wenn dieser in einem größeren Abstand (6,8 mm) über das Werkstück geführt wird;
- Figuren 12(a) - (d): ein Werkstück mit einer Bohrungsverschneidung, wobei diese Bohrungsverschneidung gratfrei ist (Figur 12(a)), einen Grat mit niedriger Grathöhe an einer Verschneidungskante aufweist, welcher einer Einschuböffnung für einen Abstandssensor zugewandt ist (Figur 12(b)), einen Grat mit größerer Höhe aufweist (Figur 12(c)) und einen Grat an einer gegenüberliegenden Verschneidungskante aufweist (Figur 12(d)); und
- Figur 13: die Spannungsverläufe, welche durch einen Abstandssensor geliefert werden, welcher jeweils durch eine Bohrung des Werkstücks gemäß den Figuren 12(a) bis (d) verschoben wird.

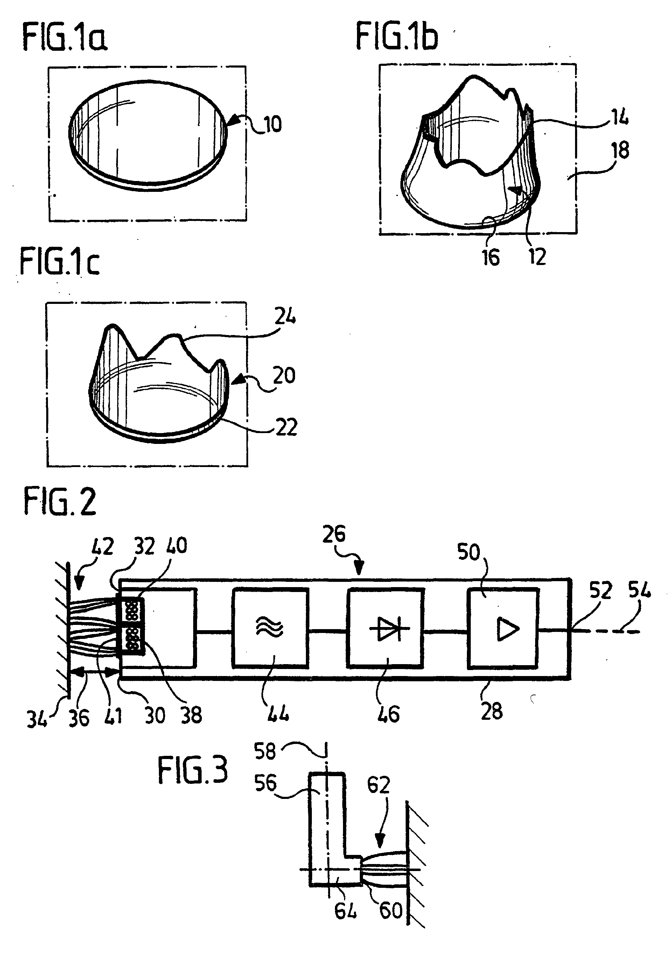

Wenn ein Werkstück und insbesondere ein metallisches Werkstück mittels eines spanabhebenden Werkzeugs bearbeitet wird, können an äußeren und inneren Oberflächen wie Bohrungsverschneidungen des Werkstücks Grate entstehen. Dies ist schematisch in den Figuren 1(a) bis (c) für Bohrungen gezeigt.

Man unterscheidet dabei verschiedene Grattypen: Der sogenannte Grat vom Grattyp 1, welcher in Figur 1(a) als Ganzes mit 10 bezeichnet ist, ist als einfacher Grat in der Form einer umlaufenden Randerhebung gebildet, wobei die Grathöhe größer als 0,15 mm ist. Ein Grat vom Grattyp 2 ist ebenfalls ein einfacher Grat, welcher eine Grathöhe von ca. 1,1 mm aufweist.

Ein Grat vom Grattyp 3, welcher in Figur 1(b) als Ganzes mit 12 bezeichnet ist, wird auch als Kronengrat bezeichnet, da eine umlaufende Kante 14 dieses Grats zackenförmig ausgebildet ist. Für den Grattyp 3 ist dabei die Grathöhe ca. 0,65 Mal der Durchmesser der Bohrung 16 in dem Werkstück 18, an welchem der Grat gebildet ist.

Als Grat vom Grattyp 4 wird ein einfacher Grat bezeichnet, welcher eine Bohrkappe umfaßt, die an dem Werkstück hängt (in der Zeichnung nicht gezeigt).

Bei einem Grat vom Grattyp 5, welcher in Figur 1(c) als Ganzes mit 20 bezeichnet ist, ist der umlaufende Rand 22 bezüglich seiner Höhe stark unregelmäßig und es sind Zacken 24 ausgebildet, welche aber nicht - im Gegensatz zum Grat vom Grattyp 3 - um den gesamten Rand 22 des Grats 20 verteilt sind.

Erfindungsgemäß ist nun eine Gratprüfungs-Sensorvorrichtung vorgesehen, mit der sich zum einen erkennen läßt, ob überhaupt ein Grat an einer Werkstückoberfläche gebildet ist; insbesondere lassen sich durch die erfindungsgemäße Vorrichtung auch quantitative Aussagen über einen Grat erhalten, beispielsweise, welche Ausdehnungen er aufweist oder zu welchem Grattyp er gehört. Durch entsprechende Ausmessung eines Werkstücks mittels der erfindungsgemäßen Gratprüfungs-Sensorvorrichtung lassen sich dann für die Weiterverarbeitung des Werkstücks verschiedene wichtige Informationen erhalten, wie beispielsweise, ob eine Nachbearbeitung bezüglich einer Gratentfernung oder Gratverkleinerung notwendig ist. Es läßt sich anhand einer Serie von Werkstücken auch eine Werkzeugüberprüfung dahingehend durchführen, daß die Gratveränderung innerhalb der Werkstückserie über die Zeit überwacht wird: Beispielsweise läßt sich das Stumpfwerden eines Bohrwerkzeugs aus der Art der Gratbildung an Bohrungsrändern ermitteln.

In Figur 2 ist schematisch ein erstes Ausführungsbeispiel einer erfindungsgemäßen Gratprüfungs-Sensorvorrichtung gezeigt, welche dort als Ganzes mit 26 bezeichnet ist. Diese umfaßt einen Abstandssensor 28 mit einem Detektorkopf 30. Der Detektorkopf 30 weist eine aktive Fläche 32 auf, über welche dieser an ein Werkstück 34 elektromagnetisch koppelbar ist, wobei die Ankopplung bestimmt ist durch einen Abstand 36 zwischen der aktiven Fläche 32 des Detektorkopfs 30 und dem Werkstück 34.

In dem in Figur 2 gezeigten Ausführungsbeispiel ist der Abstandssensor 28 ein induktiver Näherungssensor, welcher induktiv über die Erzeugung von Wirbelströmen an das Werkstück 34 koppelt, welches dazu aus einem metallischen Werkstoff gefertigt sein muß. Der Detektorkopf 30 des Abstandssensors 28 weist dazu der aktiven Fläche 32 zugewandt eine Spule 38 als induktives Element auf, an welches das metallische Werkstück 34 induktiv koppelt.

Bei dem gezeigten Ausführungsbeispiel ist die Spule 38 mit einem Schalenkern 40 versehen. Eine Grundfläche des Schalenkerns 40 bestimmt im wesentlichen die aktive Fläche 32; angenähert entspricht die Fläche einer Schalenkernkappe 41 der aktiven Fläche 32. Ein Sensorfeld 42 des Abstandssensors 28 liegt vor der aktiven Fläche 32.

Der Abstandssensor 28 umfaßt beispielhaft ferner einen Oszillator 44, einen Demodulator 46 und einen Ausgangstreiber 50. An einem Ausgang 52 des Abstandssensors 28 ist ein analoges Ausgangssignal bereitgestellt, beispielsweise ein Spannungssignal, welches abhängig ist von dem Abstand zwischen der aktiven Fläche 32 des Detektorkopfs 30 und dem Werkstück 34.

Es kann alternativ vorgesehen sein, daß eine Spule 38 des Abstandssensors 28 kernlos ist, wobei beispielsweise ein metallisches Werkstück 34 die Amplitude des schwingenden Oszillators 44 durch induktive Ankopplung beeinflußt und die Amplitude und/oder Frequenz und/oder Phase des Oszillators 44 ein Maß für den Abstand 36 ist.

Die Wechselwirkung des Abstandssensors 28 erfolgt nur über die aktive Fläche 32, welche in ihrer Ausbildung und Positionierung relativ zum Werkstück das Sensorfeld 42 definiert. Der Abstandssensor 28 mit seinem Detektorkopf 30 ist lokal an dem Werkstück 34 positionierbar und es erfolgt dann lokal eine Wechselwirkung zwischen dem Detektorkopf 30 und dem Werkstück 34 durch ein lokales Sensorfeld. Liegt ein Grat in dem Sensorfeld 42, dann wird dadurch die elektromagnetische (induktive) Kopplung zwischen der aktiven Fläche 32 und dem Werkstück 34 beeinflußt und dementsprechend ändert sich das Ausgangssignal 52. Man erhält dadurch eine lokale Information über das Werkstück, nämlich ob ein Grat vorhanden ist, wenn sich entsprechend das Signal ändert und aus der Signaländerung selber wiederum lassen sich quantitative Informationen über den Grat erhalten.

Der Abstandssensor 28 in Figur 2 wurde beispielhaft beschrieben als induktiver Abstandssensor, welcher induktiv an das Werkstück koppelt. Es kann aber auch vorgesehen sein, daß der Abstandssensor als kapazitiver Abstandssensor ausgebildet ist, welcher kapazitiv an das Werkstück 34 koppelt. Auch hier handelt es sich um eine elektromagnetische Ankopplung, wobei diese elektrostatische Ankopplung wiederum durch den Abstand 36 beeinflußt ist. Auch hier wiederum läßt sich also aus einem Ausgangssignal eines entsprechenden kapazitiven Abstandssensors eine Gratprüfung an dem Werkstück 34 durchführen.

Bei dem in Figur 2 gezeigten Ausführungsbeispiel ist die aktive Fläche 32 symmetrisch um eine Längsachse 54 des Abstandssensors 28 ausgebildet. Das Sensorfeld 42 ist dann ebenfalls symmetrisch um diese Längsachse 54 ausgebildet, sofern kein angekoppeltes Werkstück 34 vorhanden ist bzw. bei ankoppelndem Werkstück 34 dieses ebenfalls symmetrisch bezogen auf die Längsachse 54 eines in einem Abstand positionierten Abstandssensors 28 mindestens im Bereich des wirksamen Sensorfelds 42 ist.

Ein wirksamer Sensorbereich des Abstandssensors 28 (das Sensorfeld 42) weist also einen Sichtbereich mit einer Sichtrichtung auf, welche im wesentlichen parallel zu der Längsrichtung 54 des Abstandssensors 28 ist.

Es kann auch vorgesehen sein, wie in Figur 3 schematisch anhand eines Abstandssensors 56 mit einer Längsrichtung 58 gezeigt, daß eine aktive Fläche 60 quer zu dieser Längsrichtung 58 so orientiert ist, daß ein entsprechender, durch ein Sensorfeld 62 definierter Sichtbereich eine Sichtrichtung 64 aufweist, welche im wesentlichen quer und insbesondere senkrecht zu der Längsrichtung 58 des Abstandssensors 56 orientiert ist.

Der Sichtbereich eines Abstandssensors kann dabei definiert eingestellt sein und insbesondere durch Abschirmelemente eingeschränkt sein, um beispielsweise dadurch eine hohe Ortsauflösung zu erreichen. Entsprechend angeordnete Abschirmelemente beeinflussen die Ausbildung des Sensorfelds zwischen dem Abstandssensor und dem Werkstück. Bei einem induktiven Abstandssensor kann es sich dabei insbesondere um Abschirmelemente handeln, welche die Induktion von Wirbelströmen in dem metallischen Werkstück 34 beeinflussen, oder bei einem kapazitiven Abstandssensor kann es sich um Abschirmelemente handeln, welche die Ausbildung des elektrischen Felds zwischen einer aktiven Fläche und dem Werkstück beeinflussen.

An dem Ausgang 52 steht ein analoges Ausgangssignal an, welches die Abstandsinformation für den Abstand zwischen Detektorkopf 30 und Werkstück enthält. Vorzugsweise ist noch eine getrennte Auswerteeinheit vorgesehen, an die dieses Signal eines Meßkopfs drahtlos oder mittels einer Leitung übertragen wird (in der Zeichnung nicht gezeigt). Die Auswerteeinheit ermittelt dann aus den im Signal indirekt enthaltenen Gratinformationen mittels eines Auswertungsalgorithmus direkte Information über die Gratbildung, und zwar insbesondere über Ort und Ausdehnung. Beispielsweise erfolgt dazu ein Vergleich mit einem Referenzsignal, welches dem gratfreien Werkstück an der gleichen Sensorposition entspricht.

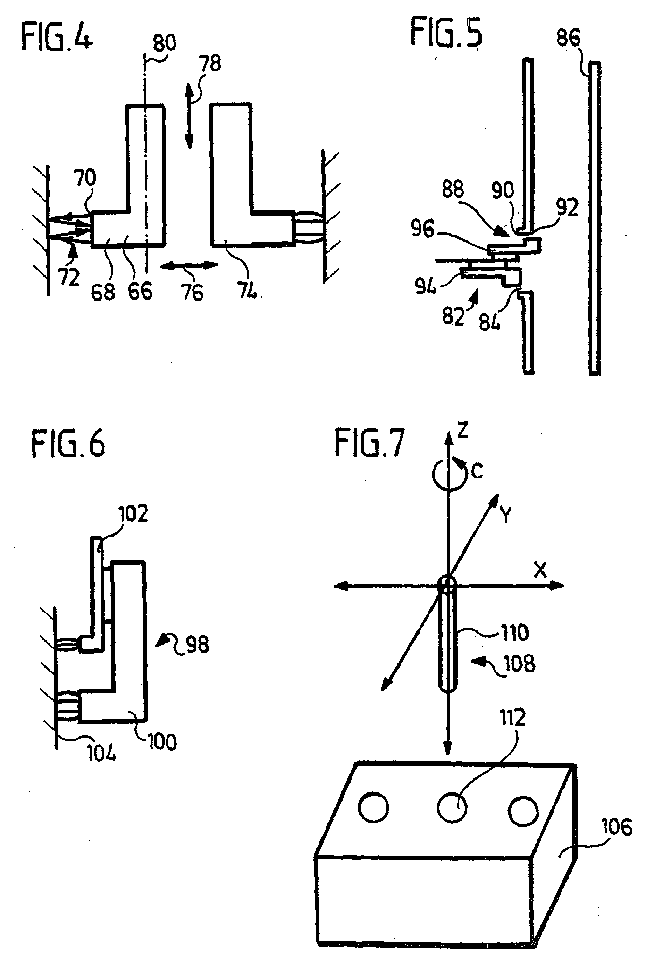

Ein Abstandssensor kann auch ein optischer Abstandssensor wie beispielsweise ein Lichttaster sein. Dies ist in Figur 4 schematisch anhand eines Abstandssensors 66 gezeigt. Dieser weist einen Detektorkopf 68 mit einer aktiven Fläche 70 auf. Über die aktive Fläche erfolgt eine Lichtbeaufschlagung des Werkstücks und weiterhin erfolgt der Empfang eines Reaktionssignals des Werkstücks, d. h. der Empfang des rückreflektierten Lichts, ebenfalls über die aktive Fläche 70. Vor dieser ist also ein Sensorfeld 72 gebildet, mittels dem das Werkstück lokal abtastbar ist und mit dessen Hilfe ein Abstand zwischen dem Detektorkopf 68 und dem Werkstück ermittelbar ist. Das Sensorfeld 72 ist also lokal zwischen dem Abstandssensor 66 und dem Werkstück gebildet.

Der Detektorkopf 68 mit seiner aktiven Fläche 70 selber stellt die Lichtquelle für das Sensorfeld 72 dar und ist ebenfalls die Empfängereinrichtung für vom Werkstück zurückreflektiertes Licht; gemessen wird nur die Lichtbeaufschlagung der aktiven Fläche 70, um daraus Informationen über den Abstand des Detektorkopfs 68 von dem Werkstück zu erhalten.

Bei einem optischen Abstandssensor 66 läßt sich das Sensorfeld 72 sehr genau und definiert ausrichten, da die Blickrichtung des Sensors bestimmt ist durch die Lichtauskopplung aus dem Detektorkopf 68 zur Beaufschlagung des Werkstücks. Insbesondere kann es vorgesehen sein, daß Licht aus dem Detektorkopf 68 faseroptisch ausgekoppelt wird. Rückreflektiertes Licht kann auch wieder faseroptisch eingekoppelt werden, um es zu einer optischen Auswerteeinheit zu führen.

Mittels der Messung von rückreflektiertem Licht lassen sich optisch auch Abstände zu nichtmetallischen Werkstoffen messen, und damit läßt sich die Gratbildung beispielsweise an keramischen Werkstoffen oder anderen Kunststoffen prüfen.

In Figur 4 ist ein Ausführungsbeispiel einer Gratprüfungs-Sensorvorrichtung schematisch gezeigt, welche eine Mehrzahl von Abstandssensoren mit jeweils einem Detektorkopf umfaßt. Beispielsweise ist neben dem Abstandssensor 66 ein weiterer Abstandssensor 74 vorgesehen. Es kann sich bei dem Abstandssensor 74 um einen optischen, induktiven oder kapazitiven Abstandssensor handeln. Grundsätzlich sind alle möglichen Kombinationen von Abstandssensoren innerhalb einer Gratprüfungs-Sensorvorrichtung mit einer Mehrzahl von Abstandssensoren möglich. Bei einer bevorzugten Ausführungsform sind jedoch die Abstandssensoren vom gleichen Typ.

Die Abstandssensoren aus der Mehrzahl von Abstandssensoren sind bevorzugterweise fest miteinander verbunden, so daß bei einer Verschiebung der Gratprüfungs-Sensorvorrichtung mit einer Mehrzahl von Abstandssensoren diese gemeinsam verschoben werden und ihre relative Position zueinander unverändert bleibt. Es kann dabei jedoch vorgesehen sein, daß die relative Position der Abstandssensoren zueinander einstellbar ist, wie es in der Figur 4 durch die Pfeile 76 und 78 angedeutet ist. Durch eine festlegbare Verschieblichkeit der Abstandssensoren 66 und 74 längs der Richtung 76 lassen diese sich zangenförmig auseinanderschieben bzw. zusammenschieben, und zwar in einer Richtung quer zu einer Längsrichtung 80 der jeweiligen Abstandssensoren. Dadurch kann eine entsprechende Gratprüfungs-Sensorvorrichtung beispielsweise an eine Bohrung angepaßt werden, in welche eine solche Sensorvorrichtung zur Gratprüfung an Bohrungswandungen eingeführt werden soll. Es läßt sich dadurch der Abstand der Abstandssensoren 66, 74 zu der entsprechenden zu überprüfenden Werkstoffoberfläche (im Fall einer Bohrung einer inneren Werkstoffoberfläche) definiert einstellen und dadurch lassen sich die entsprechenden Sensorfelder der Abstandssensoren 66 und 74 auf definierte Weise einstellen.

Es kann weiterhin eine festlegbare Einstellbarkeit der Abstandssensoren 66, 74 längs des Pfeils 78, d. h. im wesentlichen parallel zur Längsrichtung 80 der Abstandssensoren 66, 74 eingestellt werden. Dadurch lassen sich die zugeordneten Sensorfelder mit Sichtebenen beispielsweise quer zu der Längsrichtung 80 relativ zueinander versetzen, so daß gleichzeitig unterschiedliche Höhenbereiche beispielsweise in einer Bohrung durch eine Gratprüfungs-Sensorvorrichtung mit einer Mehrzahl von Abstandssensoren abtastbar sind.

Sind die Sensorfelder der Abstandssensoren 66, 74 nicht höhenmäßig versetzt zueinander, dann läßt sich, wenn eine solche Sensorvorrichtung beispielsweise in eine Bohrung eingetaucht wird, ein größerer Teil einer Umfangsoberfläche in der Bohrung gleichzeitig abtasten. Werden noch weitere Abstandssensoren umfänglich verteilt angeordnet, dann vergrößert sich dieser gleichzeitig abtastbare Bereich.

Es kann auch vorgesehen sein, daß eine Sensorvorrichtung mit einem Abstandssensor oder mit einer Mehrzahl von Abstandssensoren innerhalb beispielsweise einer Bohrung bevorzugterweise um eine Symmetrieachse der Bohrung gedreht wird, um so die Bohrungswandung umfänglich vollständig abzutasten und so eine erfindungsgemäße Gratprüfung durchzuführen.

Es kann weiterhin vorgesehen sein, daß bei einer Mehrzahl von Abstandssensoren eine Differenzsignalbildung und/oder Summensignalbildung erfolgt, und zwar insbesondere dann, wenn die Abstandssensoren die gleiche Blickrichtung aufweisen.

In Figur 5 ist ein Ausführungsbeispiel einer Gratprüfungs-Sensorvorrichtung 82 gezeigt, welche zur Überprüfung einer Bohrung 84 dient, welche in eine weitere Bohrung 86 mündet, so daß eine Verschneidung 88 vorliegt. Eine solche Verschneidung 88 weist eine Außenkante 90 auf, an der Grate vorliegen können, und eine Innenkante 92, an der ebenfalls Grate vorliegen können.

Bei der Sensorvorrichtung 82 sind zwei Abstandssensoren 94, 96 in einem solchen Abstand versetzt voneinander angeordnet, daß in einem Meßvorgang gleichzeitig die Außenkante 90 und die Innenkante 92 auf Grate geprüft werden können. Der Abstand zwischen den Abstandssensoren 94, 96 entspricht dann im wesentlichen einem Abstand zwischen Außenkante 90 und Innenkante 92. Mit dem Sensor 96 beispielsweise läßt sich dann die Gratbildung an der Innenkante 92 ausmessen, während der Abstandssensor 94 gleichzeitig Informationen über die Gratbildung an der Außenkante 90 liefert.

In den Figuren 4 und 5 sind Sensorvorrichtungen mit einer Mehrzahl von Abstandssensoren gezeigt, bei welchen die jeweiligen Sensorfelder entgegengerichtete Blickrichtungen aufweisen, so daß gegenüberliegende Werkstückoberflächen überprüfbar sind. Es kann auch vorgesehen sein, daß bei einer entsprechenden Zahl von Abstandssensoren größer als zwei beispielsweise eine Mehrzahl von radialen Blickrichtungen eingestellt sind.

In Figur 6 ist ein Ausführungsbeispiel einer Gratprüfungs-Sensorvorrichtung 98 gezeigt, bei welcher ein erster Abstandssensor 100 und ein zweiter Abstandssensor 102 vorgesehen sind, die höhenmäßig relativ zueinander versetzt sind, aber gleiche Blickrichtungen aufweisen. Bei einer Abtastung einer Werkstückoberfläche 104 durch Verschiebung der Sensorvorrichtung 98 läßt sich also ein gleicher Oberflächenbereich zuerst durch den einen Abstandssensor und dann durch den anderen Abstandssensor abtasten. Es kann dann insbesondere vorgesehen sein, daß die beiden Abstandssensoren 100, 102 unterschiedlich ausgebildet sind, beispielsweise dahingehend, daß der erste Abstandssensor 100 eine geringere Auflösung aufweist und eine Grobabtastung durchführt, beispielsweise um zu erkennen, ob überhaupt ein Grat vorhanden ist, und der zweite Abstandssensor 102 eine feinere Auflösung aufweist und sich mit diesem dann ein Grat, dessen Anwesenheit durch den ersten Abstandssensor 100 detektiert wurde, quantitativ ausmessen läßt.

Es läßt sich durch eine Anordnung von relativ zueinander fixierten aber höhenversetzten Abstandssensoren auch eine schnellere Abtastung von Werkstückoberflächen erreichen, da das resultierende Sensorfeld, mit welchem die Gratprüfungs-Sensorvorrichtung 98 auf das Werkstück wirkt, eben entsprechend der Anzahl der Abstandssensoren 100, 102 vergrößert ist.

Zur gezielten Abtastung und Überprüfung eines Werkstücks 106 auf Grate ist, wie in Figur 7 angedeutet, vorteilhafterweise eine Positioniervorrichtung vorgesehen, mittels der sich eine Gratprüfungs-Sensorvorrichtung 108 relativ zu dem Werkstück 106 an diesem in einem bestimmten Abstand zu diesem positionieren läßt. Beispielsweise ist die Sensorvorrichtung 108 mit einem als Sonde 110 ausgebildeten Abstandssensor relativ zu dem Werkstück 106 beweglich, und zwar in einer X-Richtung, Y-Richtung und Z-Richtung, wobei die Bewegung in der Z-Richtung den Höhenabstand zwischen der Sonde 110 und dem Werkstück 106 bestimmt. Die Sonde 110 läßt sich insbesondere in Bohrungen 112 am Werkstück 106 eintauchen, um innere Oberflächen des Werkstücks 106 auf Grate zu prüfen, wie sie beispielsweise durch Verschneidungen entstanden sein können.

Eine Möglichkeit zur Bewegung der Sonde 110 ist eine Positioniervorrichtung mit X-Schlitten, Y-Schlitten und Z-Schlitten.

Daneben kann es auch vorgesehen sein, daß die Sonde 110 beispielsweise um die Z-Achse drehbar ist (C-Bewegung gemäß Figur 7), um so eine innere Umfangsoberfläche einer Bohrung 112 abtasten zu können.

Bei der Bearbeitung des Werkstücks 106 mittels eines Werkzeugs muß eine Positioniervorrichtung für das Werkzeug bezüglich des Werkstücks 106 selber vorgesehen werden bzw. eine Positioniervorrichtung für das Werkstück 106 relativ zum Werkzeug. Es sind auch Kombinationen möglich, bei denen zur relativen Positionierung teilweise das Werkzeug bewegt wird (beispielsweise in Z-Richtung) und teilweise das Werkstück bewegt wird (beispielsweise in X-Richtung und Y-Richtung). Es kann vorgesehen sein, daß die Positioniervorrichtung zur relativen Positionierung zwischen Werkzeug und Werkstück 106 genutzt wird zur relativen Positionierung der Sonde 110 zu dem Werkstück 106; nach der Werkstückbearbeitung kann dann eine Überprüfung des Arbeitsergebnisses erfolgen, ohne daß das Werkstück 106 transportiert werden muß. Beispielsweise kann ein Adapter für die Werkstück-Werkzeug-Positioniervorrichtung vorgesehen sein, so daß sich die Sonde 110 über diese Positioniervorrichtung relativ zum Werkstück 106 positionieren läßt und dieses lokal abgetastet werden kann, indem die Sonde 110 an äußeren und/oder inneren Oberflächen des Werkstücks 106 entlanggefahren wird.

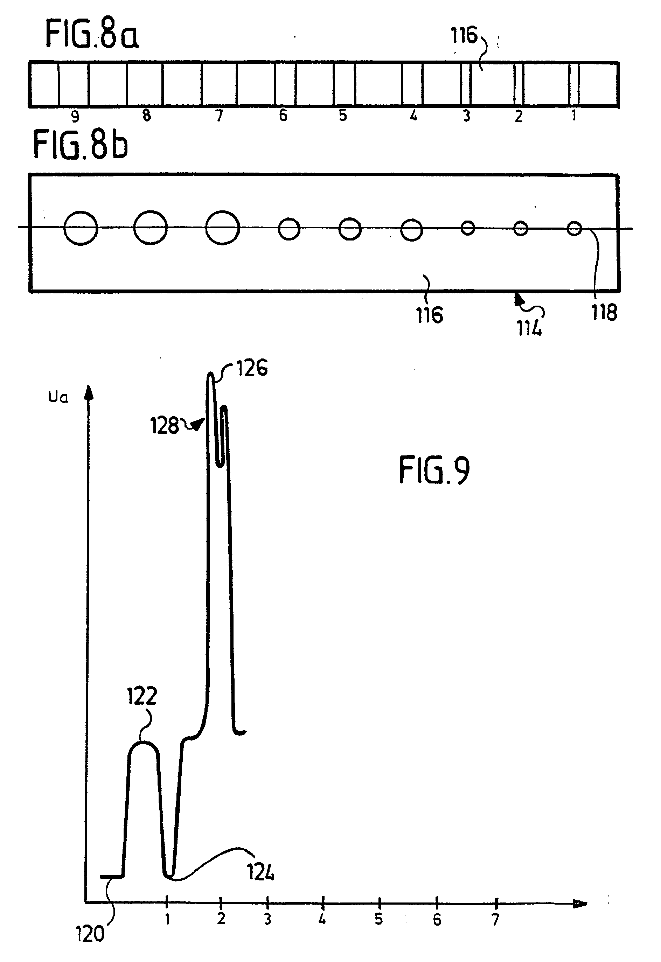

Die Figuren 8 bis 11 illustrieren Messungen, welche mit einer Gratprüfungs-Sensorvorrichtung mit einem induktiven Abstandssensor an einem Metallblock mit Bohrungen unterschiedlichen Durchmessers durchgeführt wurden. Der Metallblock ist schematisch in den Figuren 8(a) in Seitenansicht und 8(b) in Draufsicht gezeigt und dort als Ganzes mit 114 bezeichnet. Dieser weist durchgehende Bohrungen 1, 2, 3 mit einem kleinen Durchmesser, 4, 5, 6 mit einem mittleren Durchmesser und 7, 8, 9 mit einem großen Durchmesser auf. An den Bohrungen 2, 3, 5, 6 und 8, 9 sind an einer Oberfläche 116 des Metallblocks 114 Grate gebildet, wobei der Grattyp bei den Bohrungen 3, 6 und 9 der Grattyp 2 ist (vgl. Figur 1(a)) und der Grat bei den Bohrungen 2, 5 und 8 vom Grattyp 3 ist (vgl. Figur 1(b)).

Der induktive Abstandssensor 28 wird mit seiner Längsachse 54 senkrecht zur Oberfläche 116 ausgerichtet längs der Linie 118 verfahren, wobei die Linie 118 eine Durchmesser-Symmetrielinie der Bohrungen ist. Der Abstandssensor 28 ist dabei in einem bestimmten festen Abstand zu der Oberfläche 116 positioniert, d. h. der Abstand der aktiven Fläche 32 des zugeordneten Detektorkopfs 30 bleibt während des Verfahrens der Linie 118 fest. Das Sensorfeld 42 ist auf den Metallblock 114 hin zu gerichtet.

In Figur 9 ist ein erstes Meßdiagramm gezeigt, wobei der Abstandssensor in einem Abstand von 1,85 mm über der Oberfläche 116 verfahren wurde und ein Sensor mit einer kleinen aktiven Fläche verwendet wurde. Die Spannung Uₐ ist dabei eine Ausgangsspannung des Sensors, wobei diese in positive Ordinatenrichtung kleiner wird, d. h. eine Bedämpfung anzeigt. Ein Wert in der Nähe der Abszisse der Figur 9 bedeutet also, daß ein großer Abstand zu dem abgetasteten Oberflächenausschnitt des Metallblocks 114 vorhanden ist, und ein Wert weit weg von der Abszisse bedeutet, daß ein entsprechend geringer Abstand detektiert wurde.

Beim Bezugszeichen 120 in Figur 9 ist der Abstandssensor 28 außerhalb des Metallblocks 114 positioniert. Ist dieser erreicht, dann ändert sich die Spannung auf einen Wert 122, da dem Sensorfeld durch Wirbeistrominduktion im Metallblock 114 Energie entzogen wird und dadurch die Spannung abnimmt. Der Abstandssensor 28 kann in die gratfreie Bohrung 1 gewissermaßen hineinsehen, wie es durch das Bezugszeichen 124 angedeutet ist. Die Bohrung 2 weist einen Grat vom Grattyp 3 auf. Ist diese erreicht, dann ändert sich die Spannung Uₐ stark, d. h. diese fällt stark ab (Bezugszeichen 126). Anhand des Meßdiagramms der Figur 9 läßt sich also das Vorhandensein eines Grats an der Bohrung 2 detektieren. Aus der erreichten minimalen Spannung und aus dem Verlauf des Spannungsabfalls lassen sich quantitative Informationen über den detektierten Grat ermitteln, und zwar insbesondere über seine Ausdehnungen und eventuell auch über seinen Typ. Beispielsweise weist die unsymmetrische Doppelspitze 128 gemäß dem Meßdiagramm von Figur 9 darauf hin, daß es sich bei dem Grat an der Bohrung 2 um einen Kronengrat handelt, da keine einheitliche Grathöhe vorliegt und auch der starke Spannungsabfall deutet auf eine hohe Grathöhe hin; der Spannungsabfall 126 weist also auf einen Grat des Grattyps 3 hin, welcher auch tatsächlich an dem Metallblock 114 präpariert wurde.

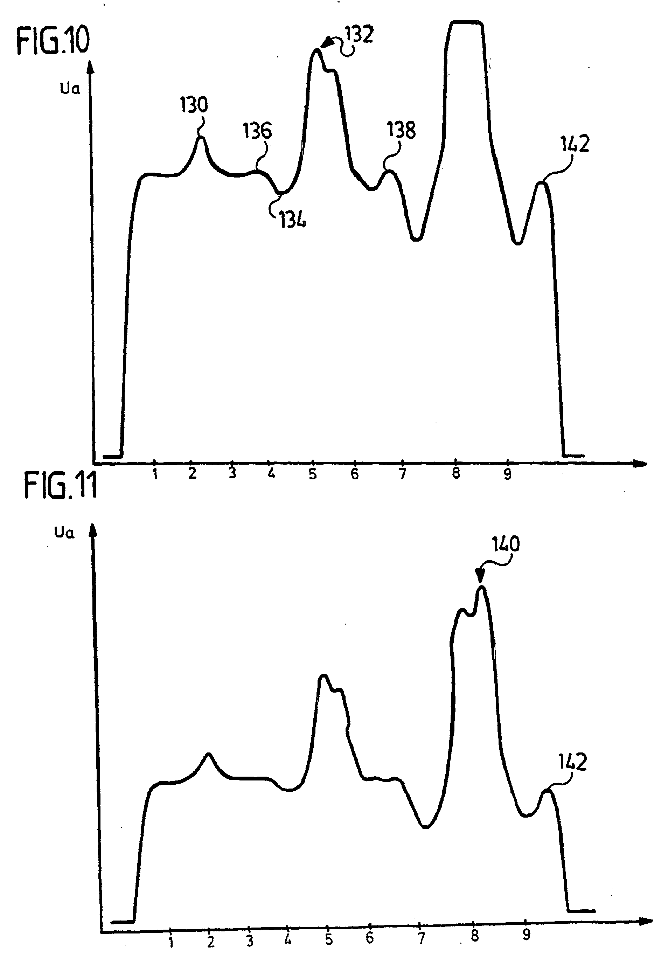

In Figur 10 ist ein entsprechendes Meßdiagramm der Abtastung des Metallblocks 114 mit einem Abstandssensor gezeigt, welcher in einem Abstand von 4,6 mm längs der Linie 118 über diesen geführt wurde. Der Durchmesser der aktiven Fläche ist dabei größer als bei dem Abstandssensor, welcher zur Ermittlung des Meßdiagramms der Figur 9 ermittelt wurde, so daß das Sensorfeld eine größere lokale Ausdehnung aufweist. Man erkennt, daß der für das Meßdiagramm der Figur 10 verwendete Abstandssensor eine geringere Auflösung aufweist. Insbesondere schaut er weniger tief in die Bohrungen. Er erkennt den Grat an der Bohrung 2 (Spannungsabfall 130), kann jedoch keine Doppelspitze auflösen. An der Bohrung 5 jedoch wird eine Doppelspitze 132 aufgelöst, was ein Indiz für das Vorhandensein eines Grats des Grattyps 3 ist, der dort auch tatsächlich präpariert wurde. Der Grat an der Bohrung 3 wird jedoch nur schwach erkannt. Der Abstandssensor kann in die Bohrung 4 in gewissem Umfang hineinschauen, was durch das Bezugszeichen 134 angedeutet ist, nicht jedoch in die Bohrung 1. Er kann noch weiter in die Bohrung 7 hineinschauen, welche den größten Durchmesser aufweist. Während der Grat vom Grattyp 2 an der Bohrung 3 nur ein schwaches Signal 136 liefert, läßt sich der Grat an der Bohrung 6 eindeutig identifizieren (Bezugszeichen 138).

Auch der Grat vom Grattyp 3 an der Bohrung 8 wird identifiziert, wobei der Spannungsabfall allerdings so stark ist, daß keine Doppelspitze mehr auflösbar ist. Es ist dabei zu beachten, daß beim Grat des Grattyps 3 die Grathöhe vom Durchmesser abhängt, d. h. der Grat an der Bohrung 8 weist eine relativ große Höhe auf, so daß der Abstandssensor diesen beinahe berührt.

Bei dem Meßdiagramm der Figur 11 wurde der gleiche Abstandssensor zur Gratprüfung verwendet wie in Figur 10, wobei dieser jedoch in einem größeren Abstand von 6,8 mm über der Linie 118 verfahren wurde. Es wird nun an der Bohrung 8 eine Doppelspitze 140 detektiert, welche, wie oben bereits erwähnt, anzeigt, daß es sich um einen Grat des Grattyps 3 handelt. Auch der Grat vom Grattyp 2 bei der Bohrung 9 wird erkannt (Bezugszeichen 142); dieser Grat wurde im übrigen auch bereits bei der Messung detektiert, welche in dem Meßdiagramm der Figur 10 resultierte.

Der Abstandssensor 28 läßt sich auch gesteuert und/oder geregelt über den Metallblock 114 fahren, um eine Gratprüfung an diesem durchzuführen. Dazu wird beispielsweise ein über den Abstandssensor 28 ermittelter Abstand als Regelgröße beim Verfahren über den Metallblock 114 im wesentlichen konstant gehalten und die Ausgangsspannung aufgezeichnet. Die absolute Position des Detektorkopfs 30 zum Metallblock 114 ist zu jedem Zeitpunkt bekannt und aus dem Vergleich des Ausgangssignals des Abstandssensors 28 mit einer Referenzkurve - welche an einem gratfreien Werkstück ermittelt wurde - lassen sich Grate mit ihrer Position (relative Abweichung zur Referenzkurve) und ihrer Ausbildung (Art und Umfang der Abweichung) erkennen.

Durch angepaßte Verwendung von entsprechend ausgebildeten Abstandssensoren insbesondere bezüglich der Größe der aktiven Fläche und/oder der Blickrichtung und/oder einer Arbeitsfrequenz des Abstandssensors und/oder der Ausbildung des Sensorfelds insbesondere bezüglich seiner Richtungsabhängigkeit und/oder Abstandsabhängigkeit läßt sich für eine bestimmte Anwendung erfindungsgemäß eine qualitative Gratprüfung durchführen und auch eine quantitative Gratprüfung.

Beispielsweise können Abstandssensoren mit großer aktiven Fläche verwendet werden, um in einem großen Abstand Grate mit hoher Grathöhe berührungsfrei abzutasten. Dadurch läßt sich weitgehend ein Anschlagen eines Abstandssensors an das Werkstück mit den Graten vermeiden.

Es kann dabei auch vorgesehen sein, daß eine Gratprüfungs-Sensorvorrichtung einen Abstandssensor aufweist, welcher ein metallisches Element aufweist, welches beim Anstoßen des Abstandssensors an das Werkstück ein Warnsignal liefert, um so Beschädigungen des Abstandssensors zu vermeiden. Es ist dabei zu beachten, daß Grate sehr scharfe Kanten haben können und bei Gratkontakt des Abstandssensors dieser in seiner Funktionsfähigkeit beeinträchtigt werden könnte oder sogar zerstört werden könnte.

Es lassen sich dann auch weitere Abstandssensoren beispielsweise mit kleinerer aktiven Fläche einsetzen, um Bohrungen abzutasten, bei denen die Auflösung durch einen Abstandssensor mit großer aktiver Fläche nicht genügend war, um auch diese Bohrungen definiert auf Grate überprüfen zu können.

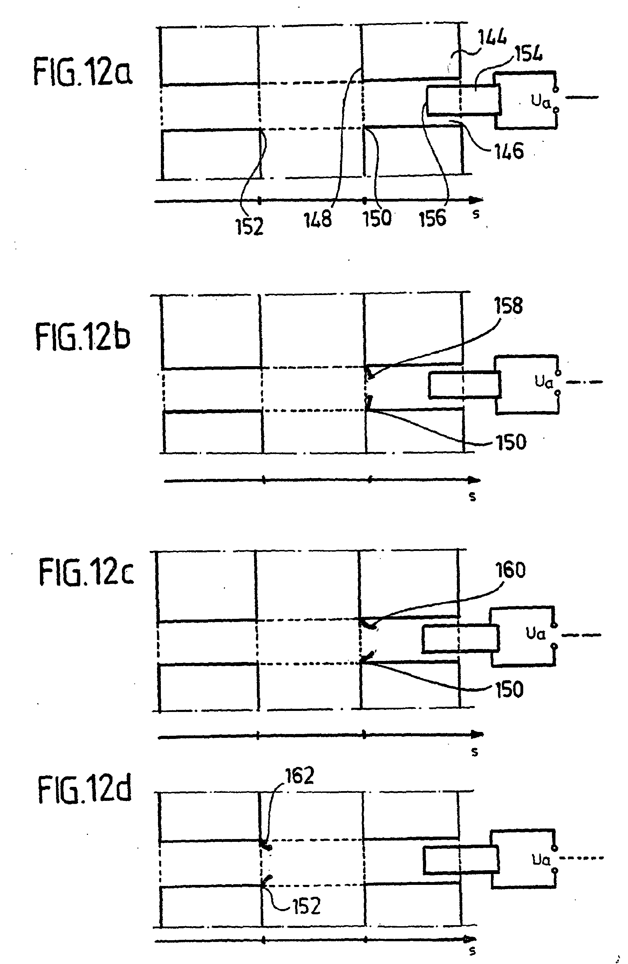

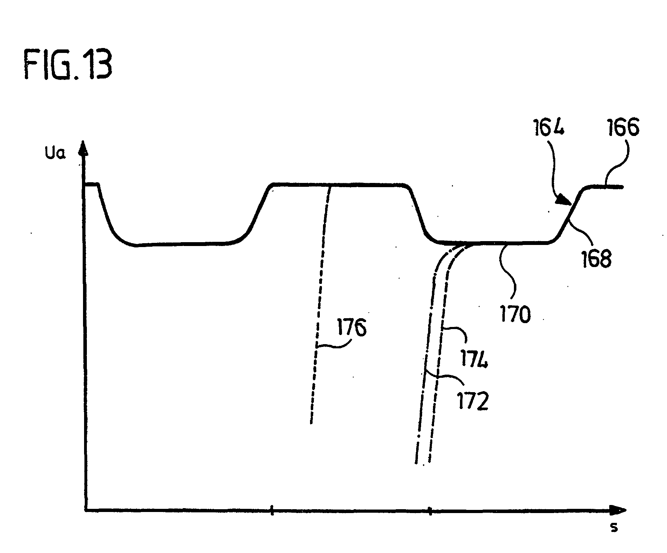

In den Figuren 12 und 13 ist schematisch eine Messung an einem Werkstück 114 gezeigt, welches eine Bohrung 146 und eine Querverschneidung 148 aufweist, wobei an einer ersten Kante 150 und einer zweiten Kante 152 Grate gebildet sein können.

Ein induktiver Abstandssensor mit einem als Sonde ausgebildeten Detektorkopf 154 und einer aktiven Fläche 156 wird in die Bohrung 146 eingeführt und in Achsrichtung dieser Bohrung 146 in Richtung der zweiten Kante 152 verschoben und dabei in Abhängigkeit des Orts s des Detektorkopfs 154 die Ausgangsspannung Uₐ des Abstandssensors registriert.

Bei dem Ausführungsbeispiel gemäß Figur 12(a) sind dabei die Kanten 150 und 152 gratfrei, bei Figur 12(b) ist an der ersten Kante 150 ein Grat 158 gebildet, bei dem Werkstück gemäß Figur 12(c) ist ebenfalls an der Kante 150 ein Grat 160 gebildet, welcher eine Grathöhe aufweist, die größer ist als die des Grats 158 gemäß Figur 12(b) und bei dem Werkstück gemäß Figur 12(d) ist an der zweiten Kante 152 ein Grat 162 gebildet.

Das Meßdiagramm gemäß Figur 13 zeigt den ermittelten Spannungsverlauf für die unterschiedlichen Werkstücke gemäß den Figuren 12(a) bis (d). Der Spannungsverlauf 164 ergibt sich für das Werkstück gemäß Figur 12(a), welches gratfrei ist. Die Spannung in Figur 13 ist dabei über der Wegstrecke so aufgetragen, daß diese mit zunehmendem Abstand von der Abszisse wächst. Außerhalb des Werkstücks liegt also eine hohe Spannung 166 vor, da keine induktive Ankopplung des Abstandssensors erfolgt. Wird dann der Abstandssensor mit seinem Detektorkopf 154 in die Nähe des Werkstücks gebracht, dann fällt durch den Energieentzug über die induzierten Wirbelströme die Spannung ab (Bezugszeichen 168). Innerhalb der Bohrung 146 ist, sofern der Detektorkopf 154 symmetrisch zu einer Bohrungsachse ausgerichtet ist, die Spannung gleichmäßig auf einem niederen Niveau 170 und steigt dann wieder an, wenn die Querverschneidung 148 erreicht ist. Bei großem Abstand zu den inneren Oberflächen des Werkstücks ist bei dem Detektorkopf 154 in der Querverschneidung 148 das ursprüngliche Spannungsniveau 166 erreicht, bis die aktive Fläche 156 wieder aus der Querverschneidung 148 in die entsprechende Fortsetzung der Bohrung 146 eintritt.

Ist nun an der Kante 150 ein Grat 158 gebildet, dann ergibt sich der Spannungsverlauf 172. Der Detektorkopf registriert in der Nähe der ersten Kante 150, daß eine Änderung der induktiven Ankopplung an das Werkstück erfolgt und die Spannung fällt stark ab, da eben der Grat 158 anwesend ist. Die Lage des Spannungsabfalls gibt dabei an, wo der Grat sitzt, d. h. welche Ausdehnung er bezogen auf die Verschiebungsrichtung aufweist. Die Steilheit des Spannungsabfalls wiederum liefert Informationen dafür, wie weit der Grat quer zu der Verschiebungsrichtung ausgebildet ist. Durch entsprechende Einstellung des Sensorfelds lassen sich damit quantitative Informationen bezüglich des Grats 158 erhalten.

Dies ist beispielhaft anhand des Spannungsverlaufs 174 für das Werkstück gemäß Figur 12(c) mit dem Grat 160 gezeigt. Dieser Grat 160 weist eine größere Höhe auf als der Grat 158 gemäß Figur 12(b), jedoch im wesentlichen eine gleiche Querabmessungen. Der Spannungsabfall tritt demnach früher ein, da eben der Grat 160 durch den Detektorkopf 154 mit seinem Sensorfeld früher erreicht ist als der Grat 158 in Figur 12(b). Die Steilheit der Spannungsverläufe 172 und 174 ist aber sehr ähnlich, da eben die Querabmessungen der Grate 158 und 160 vergleichbar sind.

Den Spannungsverlauf 176 schließlich erhält man für das Werkstück gemäß Figur 12(d), bei welchem ein Grat an der zweiten Kante 152 gebildet ist. Es erfolgt dann ein Spannungsabfall von einem höheren Spannungsniveau ausgehend, da sich der Detektorkopf 154 in einem Querverschneidungsbereich 148 befindet und so weniger stark induktiv an das Werkstück ankoppelt, wenn er zum ersten Mal in Wechselwirkung mit dem Grat 162 tritt. Es läßt sich aber wiederum durch die Lage des Spannungsabfalls der Ort des Grats bestimmen und sich seine Ausdehnung bestimmen.

Erfindungsgemäß wird eine Gratprüfung dadurch durchgeführt, daß ein Abstandssensor in einem Abstand zu dem Werkstück positioniert wird, wobei der Abstandssensor einen Detektorkopf mit einer aktiven Fläche aufweist und zwischen der aktiven Fläche und dem Werkstück ein lokales Sensorfeld ausgebildet ist. Über dieses Sensorfeld läßt sich der Abstand des Detektorkopfs von dem Werkstück ermitteln. Der Detektorkopf wird dann über dem Werkstück bewegt, bzw. das Werkstück wird relativ zu dem Detektorkopf bewegt und beim Vorhandensein von Graten ändert sich ein entsprechendes, von dem Abstandssensor generiertes Abstandssignal, aus dem sich zum einen qualitativ ablesen läßt, ob ein Grat vorhanden ist und aus dem sich auch quantitative Aussagen über die Art und die Ausbildung des Grats generieren lassen.

Durch entsprechende Ausgestaltung der Größe und Ausrichtung des Sensorfelds läßt sich die erfindungsgemäße Gratprüfungs-Sensorvorrichtung an entsprechende zu prüfende äußere und innere Werkstückoberflächen anpassen und auch durch die entsprechende Auswertung im Abstandssensor, beispielsweise durch Wahl einer bestimmten Oszillatorfrequenz und dergleichen, läßt sich eine Anpassung erreichen.

Der Abstandssensor koppelt dabei insbesondere elektromagnetisch an ein Werkstück, beispielsweise induktiv oder kapazitiv, oder wird durch den Detektorkopf mit einem elektromagnetischen Signal beaufschlagt und das Reaktionssignal wird empfangen. Auch im Falle einer elektromagnetischen Signalbeaufschlagung ist der Abstandssensor ein solcher mit einem lokalen Sensorfeld, welches durch eine aktive Fläche des Detektorkopfs bestimmt ist. Es werden erfindungsgemäß also Werkstückoberflächen lokal abgetastet, um eine Gratprüfung - qualitativ und/oder quantitativ - durchzuführen.

Die erfindungsgemäße Gratprüfungs-Sensorvorrichtung läßt sich auch zur Kantenprüfung einsetzen, beispielsweise zur Prüfung von Abfasungen und dergleichen.

## Patentansprüche

1. Gratprüfungs-Sensorvorrichtung zur Prüfung von Graten an einem Werkstück, umfassend mindestens einen Abstandssensor (28) mit einem Detektorkopf (30), wobei der Detektorkopf (30) in einem Abstand zu dem Werkstück positionierbar ist und Detektorkopf (30) und Werkstück relativ zueinander beweglich sind, und wobei der Detektorkopf (30) elektromagnetisch an das Werkstück koppelbar ist oder durch ihn das Werkstück mit einem elektromagnetischen Signal beaufschlagbar ist und die Ankopplung an das Werkstück oder ein elektromagnetisches Reaktionssignal des Werkstücks auf das Beaufschlagungssignal abhängig von einem Abstand zwischen Detektorkopf (30) und Werkstück sind, so daß dieser Abstand berührungsfrei ermittelbar ist und durch den Detektorkopf (30) eine Werkstückoberfläche berührungsfrei abtastbar ist.

2. Gratprüfungs-Sensorvorrichtung nach Anspruch 1, **dadurch gekennzeichnet, daß** der Detektorkopf (30) eine aktive Fläche (32) aufweist, über welche eine lokale Ankopplung an das Werkstück erfolgt oder über welche Beaufschlagungssignal lokal an Werkstückoberflächenbereiche abgegeben und Reaktionssignale von diesen Bereichen empfangen werden.

3. Gratprüfungs-Sensorvorrichtung nach Anspruch 1 oder 2, **dadurch gekennzeichnet, daß** Detektorkopf (30) und Werkstück parallel zu einer Abstandsrichtung relativ zueinander beweglich sind.

4. Gratprüfungs-Sensorvorrichtung nach einem der vorangehenden Ansprüche, **dadurch gekennzeichnet, daß** Detektorkopf (30) und Werkstück quer zu einer Höhenabstandsrichtung relativ zueinander beweglich sind.

5. Gratprüfungs-Sensorvorrichtung nach einem der vorangehenden Ansprüche, **gekennzeichnet durch** eine Positioniervorrichtung zur Positionierung und Bewegung des Detektorkopfs (30) relativ zum Werkstück.

6. Gratprüfungs-Sensorvorrichtung nach Anspruch 5, **dadurch gekennzeichnet, daß** der Detektorkopf (30) durch die Positioniervorrichtung längs linear unabhängiger Koordinatenrichtungen positionierbar ist.

7. Gratprüfungs-Sensorvorrichtung nach Anspruch 5 oder 6, **dadurch gekennzeichnet, daß** der Detektorkopf (30) relativ zum Werkstück drehbar ist.

8. Gratprüfungs-Sensorvorrichtung nach einem der Ansprüche 5 bis 7, **dadurch gekennzeichnet, daß** eine Positioniervorrichtung für ein Werkzeug zur Bearbeitung des Werkstücks als Positioniervorrichtung für einen Abstandssensor (28) verwendet wird.

9. Gratprüfungs-Sensorvorrichtung nach einem der vorangehenden Ansprüche, **dadurch gekennzeichnet, daß** der Detektorkopf als Sonde (110) ausgebildet ist oder in einer Sonde angeordnet ist.

10. Gratprüfungs-Sensorvorrichtung nach Anspruch 9, **dadurch gekennzeichnet, daß** die Sonde (110) in eine Bohrung am Werkstück einführbar ist.

11. Gratprüfungs-Sensorvorrichtung nach Anspruch 9 oder 10, **dadurch gekennzeichnet, daß** elektronische Komponenten der Vorrichtung ganz oder teilweise in der Sonde (110) angeordnet sind.

12. Gratprüfungs-Sensorvorrichtung nach einem der vorangehenden Ansprüche, **dadurch gekennzeichnet, daß** ein Sichtbereich des Abstandssensors (28) eingestellt ist.

13. Gratprüfungs-Sensorvorrichtung nach Anspruch 12, **dadurch gekennzeichnet, daß** ein Sichtbereich des Abstandssensors (28) elektromagnetisch einstellbar ist.

14. Gratprüfungs-Sensorvorrichtung nach Anspruch 12 oder 13, **dadurch gekennzeichnet, daß** der Abstandssensor derart ausgebildet und/oder abgeschirmt ist, daß die elektromagnetische Ankopplung zwischen Detektorkopf (30) und Werkstück auf einen bestimmten Sichtbereich beschränkt ist.

15. Gratprüfungs-Sensorvorrichtung nach einem der Ansprüche 12 bis 14, **dadurch gekennzeichnet, daß** der bestimmte Sichtbereich eine Sichtrichtung umfaßt, welche im wesentlichen quer zu einer Längsrichtung (54) eines Abstandssensors (28) ist.

16. Gratprüfungs-Sensorvorrichtung nach einem der Ansprüche 12 bis 15, **dadurch gekennzeichnet, daß** der bestimmte Sichtbereich eine Sichtrichtung umfaßt, welche im wesentlichen parallel zu einer Längsrichtung (54) eines Abstandssensors (28) ist.

17. Gratprüfungs-Sensorvorrichtung nach einem der vorangehenden Ansprüche, **dadurch gekennzeichnet, daß** in einem Meßkopf eine Signalvorverarbeitung erfolgt und eine Auswerteeinheit zur Gratprüfung vorgesehen ist.

18. Gratprüfungs-Sensorvorrichtung nach Anspruch 17, **dadurch gekennzeichnet, daß** ein Auswertungsalgorithmus ein Meßsignal mit einem Referenzverlauf vergleicht.

19. Gratprüfungs-Sensorvorrichtung nach einem der vorangehenden Ansprüche, **dadurch gekennzeichnet, daß** der Detektorkopf (30) mit Kontakten versehen ist, so daß er mit einer in einem Abstand angeordneten Einrichtung verbindbar ist.

20. Gratprüfungs-Sensorvorrichtung nach einem der Ansprüche 1 bis 18, **dadurch gekennzeichnet, daß** der Detektorkopf (30) als Remote-Einheit ausgebildet ist, welche drahtlos an eine in einem Abstand angeordnete Einrichtung koppelbar ist.

21. Gratprüfungs-Sensorvorrichtung nach einem der vorangehenden Ansprüche, **dadurch gekennzeichnet, daß** ein Abstandssensor ein induktiver Sensor (28) ist, bei welchem der Detektorkopf (30) induktiv an ein metallisches Werkstück koppelt.

22. Gratprüfungs-Sensorvorrichtung nach Anspruch 21, **dadurch gekennzeichnet, daß** der Abstandssensor (28) einen metallischen Außenflächenbereich aufweist, welcher spannungsbeaufschlagbar ist.

23. Gratprüfungs-Sensorvorrichtung nach einem der Ansprüche 1 bis 20, **dadurch gekennzeichnet, daß** ein Abstandssensor ein optischer Abstandssensor (66) ist, bei welchem der Detektorkopf das Werkstück mit einem optischen Signal beaufschlägt und ein Reflexionssignal registriert.

24. Gratprüfungs-Sensorvorrichtung nach Anspruch 23, **dadurch gekennzeichnet, daß** ein Lichtsignal faseroptisch eingekoppelt und/oder ausgekoppelt wird.

25. Gratprüfungs-Sensorvorrichtung nach einem der Ansprüche 1 bis 20, **dadurch gekennzeichnet, daß** ein Abstandssensor ein orto-induktiver Abstandssensor ist, bei welchem der Detektorkopf induktiv an ein metallisches Wertstück koppelt und das Werkstück durch den Detektorkopf mit einem optischen Signal beaufschlagbar ist und von dem Detektorkopf ein Reflexionssignal registrierbar ist.

26. Gratprüfungs-Sensorvorrichtung nach einem der Ansprüche 1 bis 20, **dadurch gekennzeichnet, daß** ein Abstandssensor ein kapazitiver Abstandssensor ist, bei welchem der Detektorkopf kapazitiv an das Werkstück koppelt.

27. Gratprüfungs-Sensorvorrichtung nach einem der Ansprüche 1 bis 20, **dadurch gekennzeichnet, daß** der Abstandssensor ein gekoppelter induktiv-kapazitiver Abstandssensor ist, bei welchem ein Element vorgesehen ist, welches sowohl induktiv als auch kapazitiv an das Werkstück koppelbar ist.

28. Gratprüfungs-Sensorvorrichtung nach einem der vorangehenden Ansprüche, **dadurch gekennzeichnet, daß** eine Mehrzahl von Abstandssensoren (66, 74) vorgesehen ist.

29. Gratprüfungs-Sensorvorrichtung nach Anspruch 28, **dadurch gekennzeichnet, daß** Sensorsignale unterschiedlicher Abstandssensoren miteinander verknüpft werden.

30. Gratprüfungs-Sensorvorrichtung nach Anspruch 28 oder 29, **dadurch gekennzeichnet, daß** ein Differenzsignal von Abstandssensoren ausgewertet wird.

31. Gratprüfungs-Sensorvorrichtung nach einem der Ansprüche 28 bis 30, **dadurch gekennzeichnet, daß** ein Summensignal von Abstandssensoren ausgewertet wird.

32. Gratprüfungs-Sensorvorrichtung nach einem der Ansprüche 28 bis 31, **dadurch gekennzeichnet, daß** Abstandssensoren der Gratprüfungs-Sensorvorrichtung die gleiche Blickrichtung aufweisen.

33. Gratprüfungs-Sensorvorrichtung nach einem der Ansprüche 28 bis 31, **dadurch gekennzeichnet, daß** Abstandssensoren der Gratprüfungs-Sensorvorrichtung unterschiedliche Blickrichtungen aufweisen.

34. Gratprüfungs-Sensorvorrichtung nach Anspruch 33, **dadurch gekennzeichnet, daß** Abstandssensoren der Gratprüfungs-Sensorvorrichtung entgegengesetzte Blickrichtungen aufweisen.

35. Gratprüfungs-Sensorvorrichtung nach einem der Ansprüche 28 bis 34, **dadurch gekennzeichnet, daß** die Abstandssensoren (66, 74) relativ zueinander fest positioniert sind.

36. Gratprüfungs-Sensorvorrichtung nach einem der Ansprüche 28 bis 35, **dadurch gekennzeichnet, daß** die relative Position von Abstandssensoren (66, 74) der Gratprüfungs-Sensorvorrichtung einstellbar ist.

37. Gratprüfungs-Sensorvorrichtung nach einem der Ansprüche 28 bis 36, **dadurch gekennzeichnet, daß** Abstandssensoren die gleiche Sichtebene aufweisen.

38. Gratprüfungs-Sensorvorrichtung nach einem der Ansprüche 28 bis 38, **dadurch gekennzeichnet, daß** Abstandssensoren versetzte Sichtebenen aufweisen.

39. Gratprüfungs-Sensorvorrichtung nach einem der Ansprüche 28 bis 38, **dadurch gekennzeichnet, daß** zwei Abstandssensoren (66, 74) vorgesehen sind.

40. Gratprüfungs-Sensorvorrichtung nach einem der Ansprüche 28 bis 38, **dadurch gekennzeichnet, daß** drei Abstandssensoren vorgesehen sind.

41. Gratprüfungs-Sensorvorrichtung nach einem der vorangehenden Ansprüche, **dadurch gekennzeichnet, daß** die Gratprüfungs-Sensorvorrichtung bezüglich Ausgestaltung von Abschirmung und/oder Blickrichtung und/oder Arbeitsfrequenz und/oder einer Freizone an das zu überprüfende Werkstück angepaßt ist.

42. Gratprüfungs-Sensorvorrichtung nach einem der vorangehenden Ansprüche, **dadurch gekennzeichnet, daß** ein Abstandssensor gesteuert und/oder geregelt über ein Werkstück verfahren wird, um dieses abzutasten.

43. Gratprüfungs-Sensorvorrichtung nach Anspruch 42, **dadurch gekennzeichnet, daß** ein vom Abstandssensor ermittelter Abstand zum Werkstück eine Regelgröße ist.

44. Verwendung eines Abstandssensors, welcher berührungsfrei arbeitet und an einem Werkstück lokal positionierbar ist und lokal mit diesem in Wechselwirkung treten kann, wobei aus der Wechselwirkung ein Abstand zwischen Werkstück und Abstandssensor ermittelbar ist, als Gratprüfungs-Sensor.

45. Verwendung eines Abstandssensors nach Anspruch 44, **dadurch gekennzeichnet, daß** der Abstandssensor elektromagnetisch an das Werkstück koppelt.

46. Verwendung eines Abstandssensors nach Anspruch 44 oder 45, **dadurch gekennzeichnet, daß** der Abstandssensor kapazitiv an das Werkstück koppelt.

47. Verwendung eines Abstandssensors nach einem der Ansprüche 44 bis 46, **dadurch gekennzeichnet, daß** der Abstandssensor induktiv an das Werkstück koppelt.

48. Verwendung eines Abstandssensors nach Anspruch 44, **dadurch gekennzeichnet, daß** der Abstandssensor einen Detektorkopf mit einem Lichtsender und Lichtempfänger umfaßt, wobei das Werkstück mittels des Detektorkopfs lokal optisch abtastbar ist.

49. Verwendung eines Abstandssensors nach einem der Ansprüche 44 bis 48, **dadurch gekennzeichnet, daß** zwischen dem Abstandssensor und dem Werkstück ein lokales Sensorfeld ausbildbar ist, über welches ein Abstand zwischen Abstandssensor und Werkstück ermittelbar ist.
